(19)

Europäisches Patentamt
European Patent Office
Office européen des brevets

(11) **EP 3 940 604 A1**

(12) **EUROPEAN PATENT APPLICATION**

(43) Date of publication:
**19.01.2022 Bulletin 2022/03**

(21) Application number: **21184441.0**

(22) Date of filing: **08.07.2021**

(51) International Patent Classification (IPC):
**G06N 3/04** *(2006.01)*    **G06N 3/08** *(2006.01)*
**G06N 20/10** *(2019.01)*

(52) Cooperative Patent Classification (CPC):
**G06N 3/0454; G06N 3/088; G06N 20/10**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.07.2020 FI 20205739**

(71) Applicant: **Nokia Technologies Oy**
**02610 Espoo (FI)**

(72) Inventors:
- **REZAZADEGAN TAVAKOLI, Hamed**
  **02170 Espoo (FI)**
- **CRICRÌ, Francesco**
  **33100 Tampere (FI)**
- **AKSU, Emre Baris**
  **33800 Tampere (FI)**

(74) Representative: **Nokia EPO representatives**
**Nokia Technologies Oy**
**Karakaari 7**
**02610 Espoo (FI)**

(54) **FEDERATED TEACHER-STUDENT MACHINE LEARNING**

(57)    A node for a federated machine learning system that comprises the node and one or more other nodes configured for the same machine learning task, the node comprising:
a federated student machine learning network configured to update a machine learning model in dependence upon updated machine learning models of the one or more node;
a teacher machine learning network;
means for receiving unlabeled data;
means for teaching, using supervised learning, at least the federated first machine learning network using the teacher machine learning network, wherein the teacher machine learning network is configured to receive the data and produce pseudo labels for supervised learning using the data and wherein the federated student machine learning network is configured to perform supervised learning in dependence upon the same received data and the pseudo-labels.

FIG 3

**Description**

TECHNOLOGICAL FIELD

Embodiments of the present disclosure relate to machine learning. In particular they relate to a machine learning classifier that can classify unlabeled data and that is of a size such that it can be shared.

BACKGROUND

Machine learning requires data. Some data is public and some is private. It would be desirable to make use of private data (without sharing it) and public date to create a robust machine learning classifier that can classify unlabeled data and that can be distributed to others.

BRIEF SUMMARY

According to various, but not necessarily all, embodiments there is provided examples as claimed in the appended claims.

According to various, but not necessarily all, embodiments there is provided a node for a federated machine learning system that comprises the node and one or more other nodes configured for the same machine learning task, the node comprising:

a federated student machine learning network configured to update a machine learning model in dependence upon updated machine learning models of the one or
more node;
a teacher machine learning network;
means for receiving unlabeled data;
means for teaching, using supervised learning, at least the federated first machine learning network using the teacher machine learning network, wherein the teacher machine learning network is configured to receive the data and produce pseudo labels for supervised learning using the data and wherein the federated student machine learning network is configured to perform supervised learning in dependence upon the same received data and the pseudo-labels.

In some but not necessarily all examples, the node further comprises an adversarial machine learning network that is configured to:

receive data,
receive pseudo-labels from the teacher machine learning network, and receive label-estimates from the federated student machine learning network, and configured to provide an adversarial loss to the teacher machine learning network for training the teacher machine learning network.

In some but not necessarily all examples, the node further comprises an adversarial machine learning network that is configured to:

receive data,
receive pseudo-labels from the teacher machine learning network, and receive label-estimates from the federated student machine learning network, and configured to provide an adversarial loss to the federated student machine learning network for training the federated student machine learning network.

In some but not necessarily all examples, the node further comprises an adversarial machine learning network that is configured to:

receive data,
receive pseudo-labels from the teacher machine learning network, and receive label-estimates from the federated student machine learning network, and configured to provide an adversarial loss to the teacher machine learning network and the federated student machine learning network for training simultaneously, substantially simultaneously and/or parallelly the federated student machine learning network and the teacher machine learning network.

In some but not necessarily all examples, the supervised learning in dependence upon the same received data and the pseudo-labels comprises supervised learning of the federated student machine learning network and, as an auxiliary task, unsupervised learning of the teacher machine learning network.

In some but not necessarily all examples, the node further comprises means for unsupervised learning of the teacher machine learning network that clusters so that intra-cluster mean distance is minimized and inter-cluster mean distance is maximized.

In some but not necessarily all examples, the second machine learning network is configured to receive the data and produce pseudo labels by clustering so that intra-cluster mean distance is minimized and inter-cluster mean distance is maximized.

In some but not necessarily all examples, the federated student machine learning network is configured to update a first machine learning model in dependence upon updated same first machine learning models of the one or more other nodes.

In some but not necessarily all examples, model parameters of the federated student machine learning network are used to update model parameters of another student machine learning network or other smaller size machine learning network.

In some but not necessarily all examples, the federated student machine learning network is a student network and the teacher machine learning network is a teacher network configured to teach the student network.;

In some but not necessarily all examples, the node is a central node for a federated machine learning system, the other node(s) are edge node(s) for the federated machine learning system, and the federated machine learning system has a centralized federated machine learning system.

In some but not necessarily all examples, a system, configured for federated machine learning, comprises the node and at least one other node, wherein the node and the at least one other node are configured for the same machine learning task, the at least one other node comprising:

a federated student machine learning network configured to update a machine learning model of the node in dependence upon updated machine learning models of the federated student machine learning network.

In some but not necessarily all examples, the at least one other node comprising:

an adversarial machine learning network that is configured to:

receive labels from the labelled data and receive label-estimates from the federated student machine learning network, and

configured to provide an adversarial loss to the federated student machine learning network for training the federated student machine learning network.

In some but not necessarily all examples, model parameters of the federated student machine learning network of the at least one node are used to update model parameters of the federated student machine learning network of the node using federated learning.

According to various, but not necessarily all, embodiments there is provided a node for a federated machine learning system that comprises the node and one or more other nodes configured for the same machine learning task, the node comprising:

a federated student machine learning network configured to update a machine learning model in dependence upon updated machine learning models of the one or more node;

means for receiving labeled data;

an adversarial machine learning network that is configured to:

receive labels from the labelled data and receive label-estimates from the federated student machine learning network, and

configured to provide an adversarial loss to the federated student machine learning network for training the federated student machine learning network,

wherein model parameters of the federated student machine learning network are used to update model parameters of another student machine learning network using federated machine learning.

According to various, but not necessarily all, embodiments there is provided a node for a federated machine learning system that comprises the node and one or more other a computer program that when loaded into a computer enables a node.

According to various, but not necessarily all, embodiments there is provided a central node for a federated machine learning system that has a centralized architecture and comprises the central node and one or more edge nodes configured for the same machine learning task, the central node comprising:

a federated student machine learning network configured to update a machine learning model in dependence upon updated machine learning models of the one or more edge node;

a teacher machine learning network;

means for receiving unlabeled data;

means for teaching, using supervised learning, at least the federated first machine learning network using the teacher machine learning network, wherein the teacher machine learning network is configured to receive the data and produce pseudo labels for supervised learning using the data and wherein the federated student machine learning network is configured to perform supervised learning in dependence upon the same received data and the pseudo-labels.

According to various, but not necessarily all, embodiments there is provided a client device, comprising:

at least one processor; and

at least one memory including computer program code;

the at least one memory and the computer program code configured to, with the at least one processor, cause the client device at least to perform:

receive sensor data from one or more sensors in the client device;

use a federated teacher-student machine learning system trained student network to inference the received sensor data to produce one or more related inference results;

determine one or more instructions based on the one or more inference results, wherein the one or more instructions can be executed in the client device and/or transmitted to some other device.

According to various, but not necessarily all, embodiments there is provided a central node for a federated machine learning system configured to a teacher-student machine learning mode, comprising;

at least one processor; and

at least one memory including computer program code;

the at least one memory and the computer program code configured to, with the at least one processor, cause at least to perform:

train, by supervised learning, a federated student machine learning network using a teacher machine learning network,

wherein the teacher machine learning network is configured to produce pseudo labels for the supervised learning using received unlabeled data,

wherein the federated student machine learning network is configured to perform supervised learning in dependence upon the received unlabeled data and the produced pseudo-labels,

send the trained federated student machine learning network to one or more client nodes,

receive one or more updated client student machine learning models from one or more client nodes for the sent trained federated student machine learning network, and update the federated student machine learning.

BRIEF DESCRIPTION

Some examples will now be described with reference to the accompanying drawings in which:

FIG. 1 shows an example of the subject matter described herein;
FIG. 2A, 2B, 2C, 2D shows another example of the subject matter described herein;
FIG. 3 shows another example of the subject matter described herein;
FIG. 4A shows another example of the subject matter described herein;
FIG. 4B shows another example of the subject matter described herein;
FIG. 5A shows another example of the subject matter described herein;
FIG. 5B shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein.

BACKGROUND AND DEFINITIONS

Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

A machine learning network is a network that performs machine learning operations. A neural network is an example of a machine learning network. A neural network (NN) is a computation graph consisting of several layers of computation. Each layer consists of one or more units, where each unit performs an elementary computation. A unit is connected to one or more other units, and the connection may be associated with a weight. The weight may be used for scaling the signal passing through the associated connection. Weights are learnable parameters, i.e., values which can be learned from training data. There may be other learnable parameters, such as those of batch-normalization layers.

A machine learning network, for example a Neural network, can be defining using a parametric model. A model parameter is an internal variable of the parametric model whose value is determined from data during a training procedure. The model parameters can, for example, comprise weight matrices, biases, and learnable variables and constants that are used in the definition of the computational graph of a neural network. The size of a neural network can be defined from different perspectives and one way is the total number of model parameters in a neural network, such as numbers of layers, artificial neurons, and/or connections between neurons.
Training is the process of learning the model parameters from data that is often achieved by minimizing an objective function, also known as a loss function. The loss function is defined to measure the goodness of prediction. The loss function is defined with respect to the task and data. Examples of loss functions for classification tasks include maximum likelihood, cross entropy, etc. Similarly, for regression, various loss functions exist such as mean square error, mean absolute error, etc.

The training process often involves reducing an error. The error is defined as the amount of loss on a new example drawn at random from data and is an indicator of the performance of a model with respect to the future. To train neural networks, backpropagation is the most common and widely used algorithm in particular in a supervised setup. Backpropagation computes the gradient of loss function with respect to the neural network weights for pairs of input and output data.

Classification is assigning a category label to the input data.

Labelled data is data that consists of pair of input data and labels (ground-truth). The ground-truth could be a category label or other values depending on the task. Unlabelled data is data that only consists of input data, i.e. it does not have any labels (ground truth) or we do not consider using the ground truth (if it exists).

Pseudo-labeled data is data that consist of pairs of input data and pseudo-labels. A pseudo-label is a ground truth that is inferred by a machine learning algorithm. For example, unlabeled data and neural network predictions on the unlabeled data could be used as pairs of input data and pseudo-labels for training another neural network.

If a small dataset is used to train a high-capacity (big) neural network, the network will overfit to that data and will not generalize to new data. If a small dataset is used to train a low-capacity (small) neural network, the network will not learn useful information from the data, that is needed to perform well the task on new data.

A teacher network is a larger model/network that is used to train a smaller model/network (a student model/network). A student network is a smaller model (based on the number of model parameters compared to the teacher model/network), trained by the teacher network using a loss function based not only on results but also models/layers. The training can happen using a loss function and a knowledge distillation process in layers of the models, e.g., using attention transfer or by minimizing the relative entropy (e.g. Kullback-leibler (KL)-divergence) between the distribution of each output layer. At the final layers, the knowledge distillation can happen by reducing the KL-divergence between the distribution outputs of the teacher and student. In the intermediate layers, the knowledge transfer happens directly between layers with equal output. If the intermediate output layers do not have equal output size one may introduce a bridge layer to rectify the output sizes of the layers.

A centralized architecture is a logical (or physical) architecture that comprises a central/server node, e.g. a computer or device, and one or more edge/local/client/IoT (Internet of things) nodes, e.g. computers or devices, wherein the central node performs one or more different processes compared to the edge nodes. For example, a central node can aggregate network models received from edge nodes to form an aggregated model. For example, a central node can distribute a network model, for example an aggregated network model, to edge nodes.

A decentralized architecture is a logical (or physical) architecture that does not comprise a central node. The nodes are able to coordinate themselves to obtain a global model.

Public data is any data with and/or without ground truth from a public domain that can be accessed publicly by any of the participating nodes and has no privacy constraint. It is data that is not private data.

Private data is data that has a privacy (or confidentiality) constraint or is otherwise not public data.

Federated learning is a form of collaborative machine learning. Multiple machine learning models are trained across multiple networks using different data. Federated learning aims at training a machine learning algorithm, for instance deep neural networks, on multiple local datasets contained in local nodes without explicitly exchanging data samples. The general principle consists of training local models of the machine learning algorithm on local (heterogeneous) data samples and exchanging model parameters (e.g. the weights and biases of a deep neural network) between these local nodes at some frequency via a central node to generate a global model to be shared by all nodes. The adjective 'federated' will be used to describe a node or network that participates in federated learning.

An adversarial neural network is a neural network which is trained to minimize/maximize an adversarial loss that is instead maximized/minimized by one or more other neural network being trained.

Adversarial loss is a loss function that measures a distance between the distribution of (fake) data generated and a distribution of the real data. The adversarial loss function can, for example, be based upon cross-entropy of real and generated distributions.

DETAILED DESCRIPTION

The following description describes in detail a node 10 for a federated machine learning system 100. The system 100 comprises the node 10 and one or more other nodes 10 configured for the same machine learning task. The node 10 comprises:

a federated smaller size first machine learning network 20, such as a federated student machine learning network, configured to update its machine learning model in dependence upon updated machine learning models of the one or more other nodes 10;
a larger size second machine learning network 30, such as a teacher machine learning network;
means for receiving unlabeled data 2;
means for teaching, using supervised learning, at least the federated first machine learning network 20 using the larger size second machine learning network 30, wherein the larger size second machine learning network 30 is configured to receive the data 2 and produce pseudo labels 32 for supervised learning using the data 2 and wherein the federated smaller size first machine learning network 20 is configured to perform supervised learning in dependence upon the same received data 2 and the pseudo-labels 32.

In some examples an adversarial network 40 can be used to process labelled data or pseudo labeled data outputs against the output from the smaller size first machine learning network 20 and from the larger size second machine learning network 30.

The federated machine learning system 100 is described with reference to a centralized architecture but a decentralized architecture can also be used.

A particular node 10 is identified in the FIGS using a subscript e.g. as $10_i$. The networks and data used in that node $10_i$ are also referenced with that subscript e.g. federated smaller size first machine learning network $20_i$, larger size second machine learning network $30_i$; unlabeled data $2_i$; labeled data $4_i$, pseudo labels $32_i$, from the larger size second machine learning network $30_i$, adversarial network $40_i$ and adversarial loss $42_i$.

The networks $20_i$, $30_i$, $40_i$, can, for example, be implemented as neural networks.

In some examples the smaller size first machine learning network 20 is a student network with the larger size second machine learning network 30 performing the role of teacher network for the student network. In the following the smaller size first machine learning network 20 will be referred to as a student network 20 and the larger size second machine learning network 30 will be referred to as a teacher network 30 for simplicity of explanation.

At least the student networks $20_i$ on different nodes 10 are defined using model parameters of a parametric model that facilitates model aggregation. The same parametric model can be used in the student networks 20i on different nodes $10_e$, $10_c$. The model can for example be configured for the same machine learning task, for example classification.

The federated machine learning system 100 enables the following:

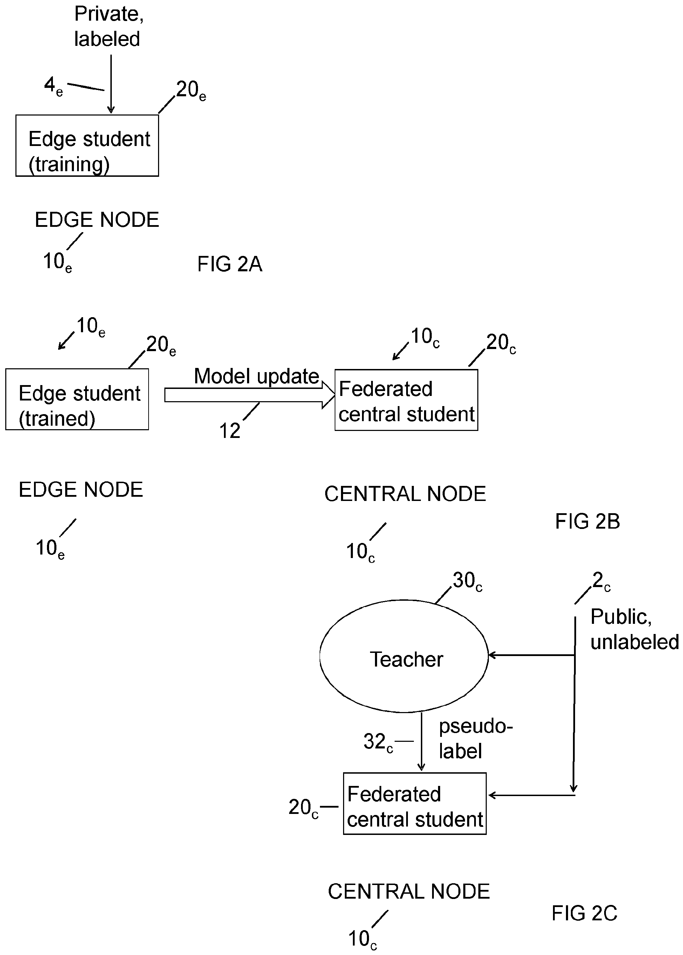

i) At one or more edge nodes $10_e$, training a federated edge student network $20_e$ (e.g. a smaller size first machine learning network) using private/local, labelled data $4_e$ (FIG 2A). Each edge node $10_e$ can, for example, use different private/local heterogenous data. Optionally, at the edge node $10_e$, using an adversarial network $40_e$ for this training

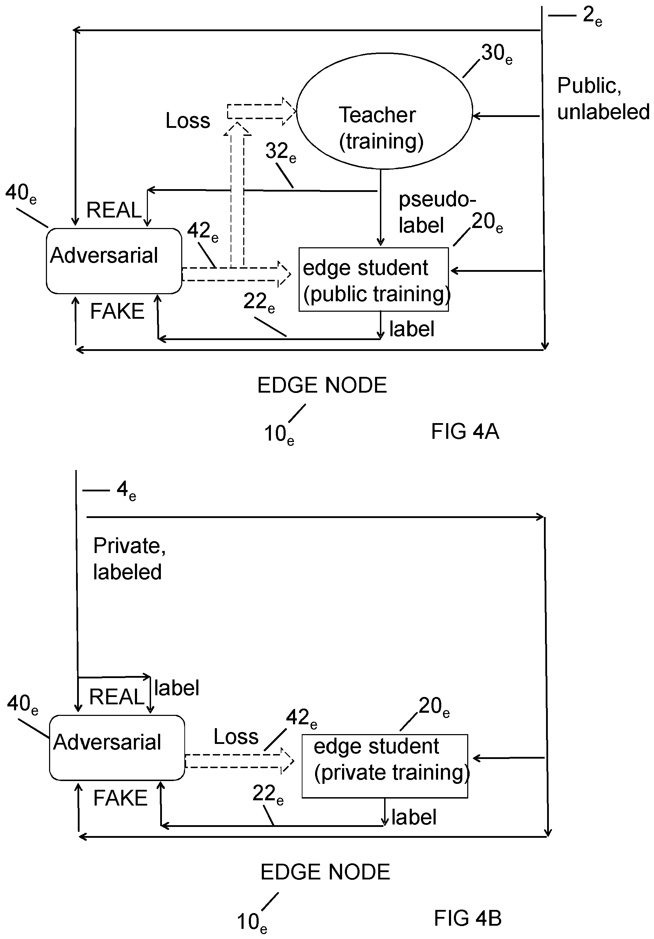

(FIG 4B). Optionally, at the edge node $10_e$, training the student network $20_e$ using a teacher network $30_e$ (adversarial network $40_e$ optional) and unlabeled public data $2_e$ (FIG 4A).

ii) At the central node $10_c$, updating a model 12 to a federated central student network $20_c$ (e.g. a smaller size second machine learning network) (FIG 2B).

iii) Improving the federated central student network $20_c$ using a central teacher network $30_c$ and public unlabeled data $2_c$ (FIG 2C).

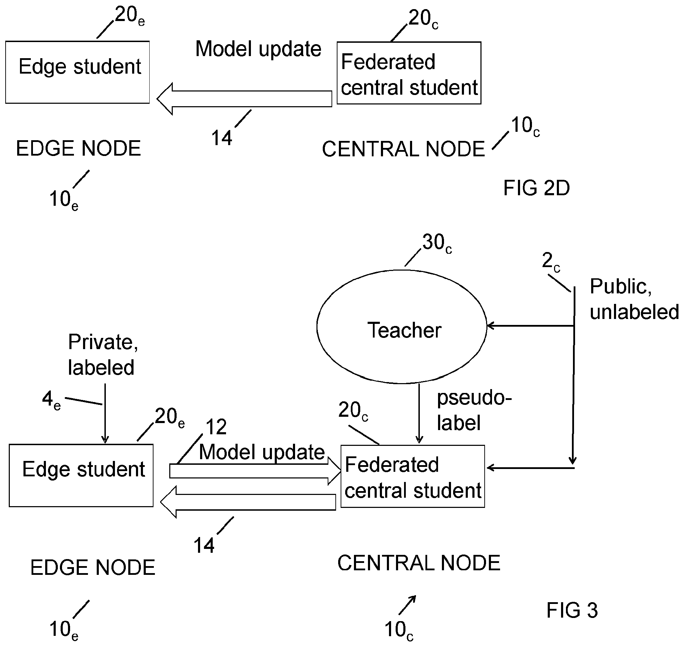

iv) Updating a model 14 to the edge student(s) networks $20_e$ (or a different student network(s) $10_e$) using the improved federated central student $20_c$ (FIG 2D)

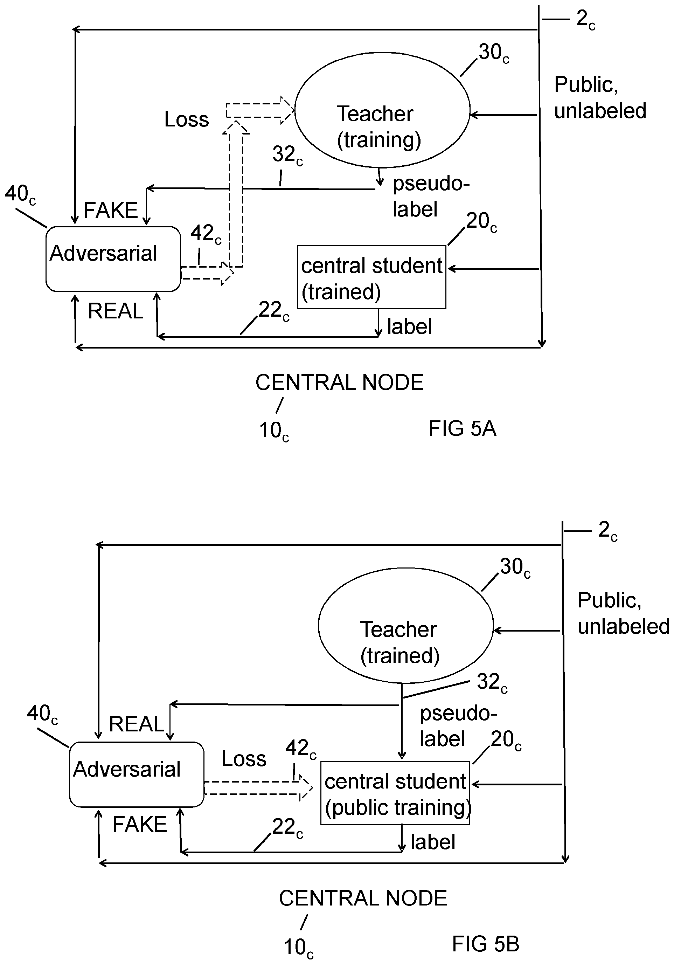

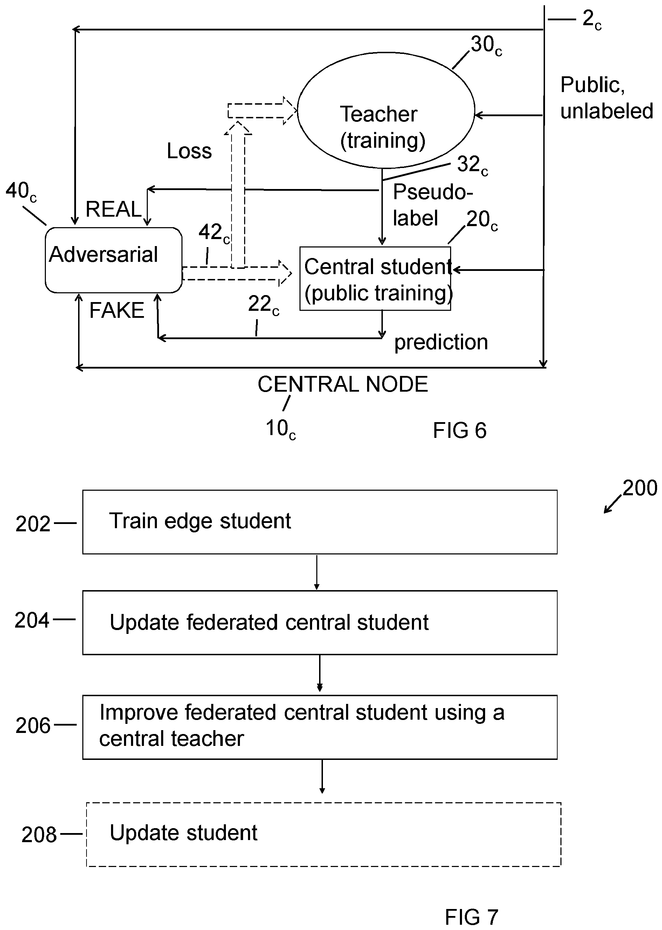

Where an adversarial network 40 is used at a node 10 (central node $10_c$, or edge node $10_e$) with a teacher network 30 that trains a student network 20, then an adversarial network 40 can improve the teacher network 30 which trains the student network 20 (e.g. FIG 5A); or

the adversarial network 40 can improve the student network 20 (e.g. FIG 5B); the adversarial network 40 can improve the teacher network 30 and the student network 20 simultaneously, substantially simultaneously and/or parallelly (FIG 6).

A teacher network 30 can use a novel loss function, for an unsupervised pseudo classification (clustering) task, based on both inter-clustering distance and inter-clustering distance.

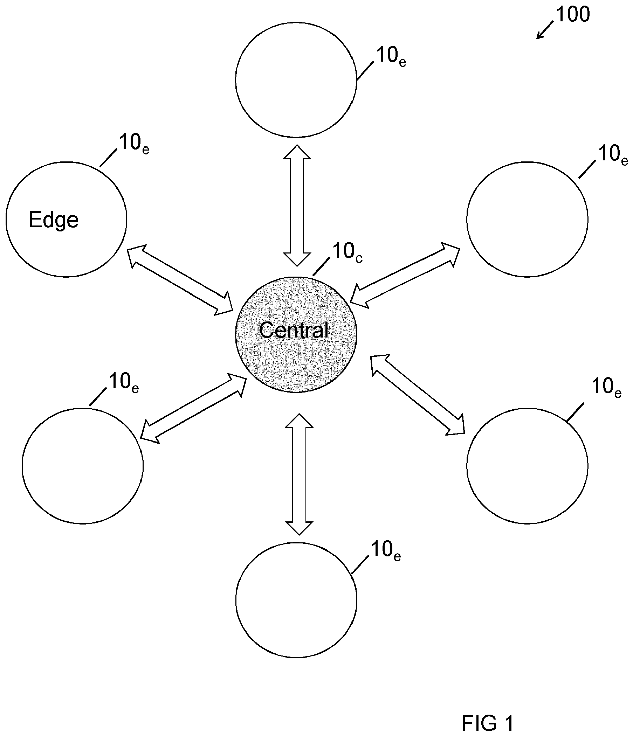

FIG. 1 illustrates a federated machine learning system 100 comprising a plurality of nodes 10. The system 100 is arranged in a centralized architecture and comprises a central node $10_c$ and one or more edge nodes $10_e$. The central node $10_c$ performs one or more different processes compared to the edge nodes $10_e$. For example, the central node $10_c$ can aggregate network models received from the edge nodes $10_e$ to form an aggregated model. For example, the central node $10_c$ can distribute a network model, for example an aggregated network model to the one or more edge nodes $10_e$. Although the centralized architecture is described, it should be appreciated that the federated machine learning system 100 can be also implemented in a decentralized architecture. In one example of the subject matter, the central node $10_c$ may be, e.g. a central computer, server device, access point, router, base station, or any combination thereof, and the edge node $10_e$ may be, e.g. a local/client computer or device, an end-user device, an IoT (Internet of things) device, a sensor device, or any combination thereof. Further, the edge node $10_e$ may be, e.g. a mobile communication device, personal digital assistant (PDA), mobile phone, laptop, tablet computer, notebook, camera device, video camera, smart watch, navigation device, vehicle, or any combination thereof. Connections between the nodes $10_e$ and $10_c$, may be implemented via one or more wireline and/or wireless connections, such as a local area network (LAN), wide area network (WAN), wireless short-range connection (e.g. Bluetooth, WLAN (wireless local area network) and/or UWB (ultra-wide band)), and/or cellular telecommunication connection (e.g. 5G (5th generation) cellular network).

The nodes 10 of the federated machine learning system 100 are configured for the same machine learning task. For example, a shared classification task.

The federated machine learning system 100 uses collaborative machine learning in which multiple machine learning networks are trained across multiple nodes 10 using different data. The federated machine learning system 100 is configured to enable training of a machine learning model, for instance a neural network, such as an artificial neural network (ANN), or a deep neural network (DNN), on multiple local data sets contained in local nodes $10_e$ without explicitly exchanging data samples. The local models on the nodes $10_e$ are trained on local/private (heterogenous) data samples and the trained parameters of the local models are provided to the central node $10_c$ for the production of an aggregated model.

The operation of the federated machine learning system 100 is explained in more detail with reference to the following figures.

Referring to FIG. 2A, an edge node $10_e$ comprises an edge student network $20_e$. The edge student network $20_e$ is, for example, a neural network. The edge student network $20_e$ is trained, via supervised learning, using private/local, labelled data $4_e$.

In FIG. 2B, trained model parameters 12 of the parametric model of the trained edge student network $20_e$ at the edge node $10_e$ is transferred/updated from the edge node $10_e$ to the central node $10_c$. The central node $10_c$ comprises a federated smaller sized machine learning network, a central student network $20_c$. The central student network $20_c$ is, for example, a neural network. The model parameters 12 provided by the one or more edge nodes $10_e$ are used to update the model parameters of the central student network $10_c$. The updating of the central student network $10_c$ can be performed by averaging or weighted averaging of model parameters supplied by one or more edge student networks $20_e$.

The edge student networks $20_e$ and the central student network $20_c$ can be of the same design/architecture and use the same parametric model. Thus, the central student network $20_c$ is configured to update a machine learning model in dependence upon one or more updated same machine learning models of one or more other nodes $10_e$.

FIG. 2C illustrates the improvement of the central student network $20_c$ using a central teacher network $30_c$ and public unlabeled data $2_c$. The central student network $20_c$ is improved via supervised teaching. The central teacher network $30_c$ performs an auxiliary classification task on the public, unlabeled data $2_c$ to produce pseudo labels $32_c$ for the public unlabeled data $2_c$. The public unlabeled data $2_c$ is therefore consequently pseudo-labelled data. The pseudo-labelled data including the public, unlabeled data $2_c$ and the pseudo labels for that data $32_c$ is provided to the central student network $20_c$ for supervised learning. The central student network $20_c$ is trained on the pseudo-labelled public data $2_c$, $32_c$.

It will therefore be appreciated that FIG. 2C illustrates an example of a node $10_c$ for a federated machine learning system 100 that comprises the node $10_c$ and one or more other nodes $10_e$ configured for the same machine learning task, the node $10_c$ comprising:

a federated smaller sized machine learning network $20_c$ configured to update its machine learning model in dependence upon updated machine learning models of the one or more nodes $10_e$;
a larger sized second machine learning network $30_c$;
means for receiving unlabeled data $2_c$;
means for teaching, using supervised learning, at least the federated first machine learning network $20_c$ using the larger sized second machine learning network $30_c$, wherein the larger sized second machine learning network $30_c$ is configured to receive the data $2_c$ and produce pseudo labels $32_c$ for supervised learning using the data $2_c$ and wherein the federated smaller sized machine learning network $20_c$ is configured to perform supervised learning in dependence upon the same received data $2_c$ and the pseudo labels $32_c$.

In this example, but not necessarily all examples, the node is a central node $10_c$ for a federated machine learning system 100. The other node(s) are edge node(s) $10_e$ for the federated machine learning system 100. The federated machine learning system 100 is a centralized federated machine learning system.

It will be appreciated from the foregoing that the supervised learning in dependence upon the same received data $2_c$ and the pseudo labels $32_c$ comprises supervised learning of the federated smaller sized machine learning network $20_c$ and, as an auxiliary task, unsupervised learning of the larger sized machine learning network $30_c$.

The federated smaller sized first machine learning network $20_c$ is a student network and the larger sized second machine learning network $30_c$ is a teacher network configured to teach the student network.

As illustrated in FIG. 2D, model parameters 14 of the improved central student network $20_c$ are provided to the edge student network(s) $20_e$ to update the model parameters of the models shared by the edge student network(s) $20_e$. It is therefore possible for a single edge student network $20_e$ to provide model parameters 12 to update the central student network $20_c$ and to also receive in reply model parameters 14 from the central student network $20_c$ after the aggregation and improvement of the model of the central student network $20_c$. This is illustrated in FIG. 3. However, in other examples it is possible for different one or more edge student networks $20_e$ at different edge nodes $10_e$ to provide the model parameters 12 compared to the edge student networks $20_e$ at edge nodes $10_e$ that receive the model parameters 14.

FIG. 3 illustrates the operations described in relation to figures 2A, 2B, 2C and 2D in relation to an edge student network $20_e$ comprised in an edge node $10_e$ and a central node $10_c$.

Although a single edge node $10_e$ is illustrated in FIGS. 2A, 2B, 2C, 2D and FIG. 3 for the purposes of clarity of explanation, it should be appreciated that in other examples there may be multiple edge nodes $10_e$, for example as illustrated in FIG. 1.

FIGS. 4A, 4B, 5A, 5B and 6 illustrates nodes 10 that comprise an adversarial network 40. An adversarial neural network is a neural network which is trained to minimize/maximize an adversarial loss that is instead maximized/minimized by one or more other neural networks being trained. Typically, an adversarial loss is a loss function that measures a distance between a distribution of (fake) data generated by the network being trained and a distribution of the real data. The adversarial loss function can, for example, be based upon cross-entropy of real and generated distributions.

FIG. 4A and 4B illustrate examples of training a federated edge student network $20_e$ using respectively public-unlabeled data $2_e$ and private, labelled data $4_e$. These can be considered to be detailed examples of the example illustrated in FIG. 2A.

FIG. 4A illustrates using a teacher network $30_e$ for training the edge student network $20_e$ using unlabeled public data $2_c$. The use of an adversarial network $40_e$ is optional.

The teacher network $30_e$ operates in a manner similar to that described in relation to FIG. $2_c$ except it is located at an edge node $10_e$. The teacher network $30_e$ performs an auxiliary task of pseudo-labelling the public, unlabeled data $2_e$.

FIG. 4A illustrates the improvement of the edge student network $20_e$ using an edge teacher network $30_e$ and the public unlabeled data $2_e$. The edge student network $20_e$ is improved via supervised teaching. The edge teacher network $30_e$ performs an auxiliary classification task on the public, unlabeled data $2_e$ to produce pseudo labels $32_e$ for the public unlabeled data $2_e$. The public unlabeled data $2_e$ is therefore consequently pseudo-labelled data. The pseudo-labelled data including the public, unlabeled data $2_e$ and the pseudo labels for that data $32_e$ is provided to the edge student network $20_e$ for supervised learning. The edge student network $20_e$ is trained on the pseudo-labelled public data $2_e$, $32_e$.

It will therefore be appreciated that FIG. 4A illustrates an example of a node $10_e$ for a federated machine learning system 100 that comprises the node $10_e$ and one or more other nodes $10_c$, $10_e$ configured for the same machine learning task, the node $10_e$ comprising:

a federated smaller sized machine learning network $20_e$ configured to update its machine learning model in dependence upon updated machine learning models of the one or more nodes $10_e$, $10_e$;
a larger sized second machine learning network $30_e$;
means for receiving unlabeled data $2_e$;
means for teaching, using supervised learning, at least the federated first machine learning network $20_e$ using the larger sized second machine learning network $30_e$, wherein the larger sized second machine learning network $30_e$ is configured to receive the data $2_e$ and produce pseudo labels $32_e$ for supervised learning using the data $2_e$ and wherein the federated smaller sized machine learning network $20_e$ is configured to perform supervised learning in dependence upon the same received data $2_e$ and the pseudo labels $32_e$.

The teacher high capacity neural network $30_e$ can also solve an auxiliary task. The auxiliary task , in this example but not necessarily all examples is clustering the publicly available data $2_e$ to the number of labels of the privately existing data $4_e$. Other auxiliary tasks are possible. The auxiliary task need not be a clustering task.

The clustering can be done with any of existing known techniques of classification using unsupervised machine learning e.g. k-means, nearest neighbors loss etc. In this example, the clusters are defined so that an intra-cluster mean distance is minimized and an inter-cluster mean distance is maximized. The loss function L has a non-conventional term for inter-cluster mean distance.

A clustering function $\phi$ parametrized by a neural network is learned, where for a sample $X_i$, there exists a nearest neighbor set $S_{xi}$, and a furthest neighbor set $N_{xi}$. The clustering function performs soft assignments over the clusters. The probability of a sample $X_i$, belong to a cluster C is denoted by $\phi^c(X_i)$, the function $\phi$ is learned by the following objective function L over a database D of public, unlabeled data $2_e$ is:

$$L = -1/|D| \sum_{X \in D} \sum_{k \in S_X} log < \phi(X), \phi(k) > + \lambda_0 \sum_{X \in D} \sum_{j \in N_X} log < \phi(X), \phi(j) >$$

$$+ \lambda_1 \sum_{c \in C} \phi'^c log\phi'^c$$

where

$$\phi'^c = 1/|D| \sum_{X \in D} \phi^c(X)$$

$<.,.>$ denotes dot product.

The negative first intra-class/cluster term ensures consistent prediction for a sample and its neighbor. The positive second inter-class/cluster term penalizes any wrong assignment from a furthest-neighbor set of samples. The last term is an entropy term that adds a cost for too many clusters.

The function encourages similarity to close neighbors (via the intra-class or intra-cluster term), and dissimilarity from far away samples (via the inter-class or inter-cluster term).

The method of pseudo-labeling by the teacher network 30 of unlabeled public data comprises: :

a) First nearest neighbors and most-distant neighbors are mined from the unlabeled data
b) The proposed clustering loss function is minimized
c) The clusters are turned into labels, using an assignment mechanism. For example, for every sample, a pseudo label is obtained by assigning the sample to its predicted cluster.

Next, the student network $20_e$ is trained using the generated labels $32_e$ to label the corresponding public, unlabeled data $2_e$. This can be achieved by minimizing the cross-entropy loss and KL-divergence between the last layers of the teacher network $30_e$ and student network $20_e$ as loss terms. That is the loss function is defined as follows:

$$L1 = L\_task + L\_KL,$$

Where the L_task is a suitable loss function, for example cross-entropy loss for image classification and L_KL is the Kullback-leibler divergence loss, defined as $D(P||Q) = \sum_x P(x)\log(P(x)/Q(x))$, where $P(x)$ and $Q(x)$ is the distribution of predictions on the last layer of the neural networks.

Optionally an adversarial network $40_e$ can be used to perform adversarial training of the edge student $20_e$ using public unlabeled data $2_e$ and/or the edge teacher network $30_e$.

In some but not necessarily all examples, the generator (edge student network $20_e$) tries to minimize a function while the discriminator (adversarial network $40_e$) tries to maximize it. An example of a suitable function is:

$$Ex(\log(D(x))] + Ex[\log(1-D(G(z)))]$$

D(x) is the Discriminators estimate of the probability that real data instance x is real
Ex is the expected value over all real instances
G(z) is the Generators output given noise z
D(G(z)) is the Discriminator's estimate of the probability that a fake data instance x is real

Adversarial training of teacher network $30_e$ involves an adversarial machine learning network $40_e$ that is configured to:

receive unlabeled data $2_e$,
receive pseudo-labels $32_e$ from the teacher network $30_e$, and receive label-estimates $22_e$ from the student network $20_e$, and

i) configured to provide an adversarial loss $42_e$ to the teacher network $30_e$ for training the teacher network $30_e$ and/or
ii) configured to provide the adversarial loss $42_e$ to the student network $20_e$ for training the federated student network $20_e$ or training simultaneously, substantially simultaneously and/or parallelly the federated student network $20_e$ and the federated teacher network $30_e$.

Now, the teacher is trained, the teacher starts to run the clustering loss L and minimizes the clustering loss to produce pseudo labels $32_e$. The student starts being trained in a supervised manner by the labels produced by the teacher. The discriminator works against the student this time.

After the student network $20_e$ is trained by the teacher $30_e$, with or without adversarial training, (FIG 4A), the student network $20_e$ it is further trained with the private data $4_e$ by playing against the adversarial network $40_e$ (FIG 4B).

FIG 4B illustrates an example of FIG 2A in which there is adversarial training of the edge student network $20_e$ using private labeled data $4_e$.

An adversarial machine learning network $40_e$ is configured to:

receive labels from the labelled data $4_e$ and receive label-estimates $22_e$ from the federated student network $20_e$, and configured to provide an adversarial loss $42_e$ to the federated student network $20_e$ for training the federated student network $20_e$.

The edge node $10_e$ is therefore comprises:

a federated smaller size first machine learning network $20_e$ configured to update its machine learning model in dependence upon a received updated machine learning model;
means for receiving labeled data $4_e$; and
an adversarial machine learning network $40_e$ that is configured to:

receive labels from the labelled data $4_e$ and receive label-estimates $22_e$ from the federated smaller size first machine learning network $20_e$, and
configured to provide an adversarial loss $42_e$ to the federated smaller size first machine learning network $20_e$ for training the federated smaller size first machine learning network $20_e$,
wherein model parameters of the federated smaller size first machine learning network $20_e$ are used to update model parameters of another smaller size machine learning network $20_c$ using federated machine learning.

FIGs 5A, 5B and 6 illustrated in more detail use of an adversarial network at a node 10, for example a central node $20_2$.

The processes illustrated in FIGs 5A, 5B and 6 are as described for FIG. 4A but instead occur at the central node.

FIGs 5A, 5B and 6 illustrate the improvement of the central student network $20_c$ using a central teacher network $30_c$ and public unlabeled data $2_c$. The central student network $20_c$ is improved via supervised teaching. The central teacher network $30_c$ performs an auxiliary classification task on the public, unlabeled data $2_c$ to produce pseudo labels $32_c$ for the public unlabeled data $2_c$. The public unlabeled data $2_c$ is therefore consequently pseudo-labelled data. The pseudo-labelled data including the public, unlabeled data $2_c$ and the pseudo labels for that data $32_c$ is provided to the central student network $20_c$ for supervised learning. The central student network $20_c$ is trained on the pseudo-labelled public data $2_c$, $32_c$.

There is therefore illustrated an example of a node $10_c$ for a federated machine learning system 100 that comprises the node $10_c$ and one or more other nodes $10_e$ configured for the same machine learning task, the node $10_c$ comprising:

a federated smaller sized machine learning network $20_c$ configured to update a machine learning model in dependence upon updated machine learning models of the one or more nodes $10_e$;
a larger sized second machine learning network $30_c$;
means for receiving unlabeled data $2_c$;
means for teaching, using supervised learning, at least the federated first machine learning network $20_c$ using the larger sized second machine learning network $30_c$, wherein the larger sized second machine learning network $30_c$ is configured to receive the data $2_c$ and produce pseudo labels $32_c$ for supervised learning using the data $2_c$ and wherein the federated smaller sized machine learning network $20_c$ is configured to perform supervised learning in dependence upon the same received data $2_c$ and the pseudo labels $32_c$.

The data on the central node $10_c$ is only a set of public data $2_c$. and there is no access to a privately held available database.

Optionally, the central node $10_c$, uses an adversarial network $40_c$ to improve the teacher network $30_c$ (FIG 5A). Optionally, the central node $10_c$, uses an adversarial network $40_c$ to improve the student network $20_c$ (FIG 5B). Optionally, the central node $10_c$ uses an adversarial network $40_c$ to improve both the teacher network $30_c$ and the student network $20_c$ (FIG 6).

Training of the central teacher network $30_c$ can use the loss function L based on both inter-clustering distance and inter-clustering distance.

Training of the student network $20_c$ by the central network can use the loss function L1.

Simultaneous, substantially simultaneous and/or parallel training of the central teacher network $30_c$ and the central student network $20_c$ can use a combined loss function based on L and L1 e.g. L + L1.

Referring to Fig 5A, the student network $20_c$ teaches the teacher $30_c$. The student network $20_c$ receives the public unlabeled data $2_c$ and generates student pseudo-labels $22_c$ for the public unlabeled data $2_c$. The teacher network $30_c$ is trained with the student pseudo labels $22_c$ produced by the student network $20_c$. The adversarial network $40_c$ works against teacher network $30_c$.

Thus, adversarial training of central teacher network $30_c$ is achieved using an adversarial machine learning network that is configured to:

receive public unlabeled data $2_c$,
receive fake pseudo-labels $32_c$ from the teacher network $30_c$, and receive label-estimates (the pseudo labels) $22_c$ from the federated student network $20_c$, and configured to provide an adversarial loss $42_c$ to the teacher network $30_c$ for training the teacher network $30_c$.

The loss function can for example be a combination of a loss function for training the teacher network (e.g. L or L_unsupervised) and an adversarial loss function (L_adv). The loss function can for example be L+ L_adv or L_unsupervised + L_adv. L is only one way of defining a clustering loss. All the loss functions are back propagated at once.

Now, the teacher is trained, as illustrated in FIG 5B, the teacher network $30_c$ starts to run the clustering loss L (described above) and minimizes the clustering loss to produce soft labels. This involves unsupervised learning of the teacher network $30_c$ that clusters so that intra-cluster mean distance is minimized and inter-cluster mean distance is maximized. The student network $20_c$ starts being trained in a supervised manner by the pseudo-labels $32_c$ produced by the teacher network $30_c$. The adversarial network $40_c$ works against the student network $20_c$ this time.

Thus, adversarial training of central student network $20_c$ is achieved using an adversarial machine learning network $40_c$ that is configured to:

receive public unlabeled data $30_c$,
receive pseudo-labels $32_c$ from the teacher network $30_c$, and receive label-estimates $22_c$ from the student network $20_c$, and

configured to provide an adversarial loss $42_c$ to the student network $20_c$ for training the student network 30c.

The loss function can for example be a combination of a loss function for training the student network (e.g. L1) and an adversarial loss function (L_adv). The loss function can for example be L1 + L_adv.

Whereas, in FIG 5A and 5B, the teacher network $30_c$. is first trained and the then the student network is trained, in FIG 6 the teacher network $30_c$. and the student network are trained jointly.

The adversarial machine learning network $40_c$ is configured to:

receive public unlabeled data $2_c$

receive pseudo-labels $32_c$ from the teacher network $30_c$, and receive label-estimates $22_c$ from the student network $20_c$, and

configured to provide an adversarial loss $42_c$ to the teacher network $30_c$ and the student network $20_c$ for training simultaneously, substantially simultaneously and/or parallelly the student network $20_c$ and the teacher network $30_c$.

The loss function can for example be a combination of a loss function for training the student network (e.g. L1), a loss function for training the teacher network (e.g. L or L_unsupervised) and an adversarial loss function (L_adv). The loss function can for example be L+ L1 + L_adv or L_unsupervised + L1 + L_adv. L is only one way of defining a clustering loss. All the loss functions are back propagated at once.

The adversarial machine learning network $40_c$ enables unsupervised learning of the teacher network $30_c$ that clusters so that intra-cluster mean distance is minimized and inter-cluster mean distance is maximized.

The student and teacher simultaneously, substantially simultaneously and/or parallelly minimize the combination of the clustering loss and a KL-loss (e.g. L or L_unsupervised) between their last convolution layers (e.g. minimize L + L_KL or L_unsupervised + L_KL), meanwhile play against the adversarial network $40_c$ that has access to the labels generated by student network $20_c$. L is only one way of defining a clustering loss.

The examples of FIGs 5A, 5B, 6 are at the central node $10_c$ using public unlabeled data $2_c$.

The examples of FIGs 5A, 5B, 6 can also be used at the central node $10_c$ using labeled data. The real labels for the adversarial network $40_c$ then come from the data and not the student network $20_c$ (FIG 5A) or the teacher network $30_c$ (FIG 5B)

The examples of FIGs 5A, 5B, 6 can also be used at the central node $10_c$ using a mix of unlabeled data and/or labeled data. The data can be public and/or private. When using labeled data, the real labels for the adversarial network $40_c$ then come from the data and not the student network $20_c$ (FIG 5A) or the teacher network $30_c$ (FIG 5B).

Thus far the federated learning comprises only updating of the federated central student network $20_c$ by the federated edge student network $20_e$ (and vice versa). However, the federated learning can extend to the central teacher network $30_c$ and the edge teacher network $30_e$ (if present) in an analog manner as in FIGS 2B and 2D. Thus, the teacher networks 30 can also be federated teacher networks. Thus if there is one or more edge teacher networks $30_e$, in at least some examples, the central teacher network $30_c$ can be updated in whole or part by the one or more edge teacher networks $30_e$ (and vice versa) by sending updated model parameters of the one or more edge teacher networks $30_e$ to the central teacher network $30_c$.

The federated learning can also extend to the adversarial networks 40 (if present) in an analog manner as in FIGS 2B and 2D. Thus, the adversarial networks 40 can also be federated adversarial networks. Thus if there is one or more edge adversarial networks $40_e$ and a central adversarial network $40_c$, in at least some examples, the central adversarial network $40_c$ can be updated in whole or part by the one or more edge adversarial networks $40_e$ (and vice versa) by sending updated model parameters of the one or more edge adversarial networks $40_e$ to the central teacher network $40_c$.

A brief description of configuring the various network is given below.

Pretraining is optional. In federated learning, we may use the weights from a network that is already pre-trained. A pre-trained network is one that is already trained on some task, e.g., in image classification tasks, we often first train a neural network on ImageNet. Then, we use it in a fine-tuning or adaptation step in other classification tasks. This pre-training happens offline for each of the neural networks.

Suitable example networks include (but are not limited to) ResNet50 (teacher), ResNet18 (student) and ResNet18, VGG16, AlexNet (adversarial).

In at least some example, the same public data can be used in all nodes 10. In practice, each edge node can have its own public data as well.

The first initialization of the nodes of the networks (if done simultaneously) can be the same. However, a node can join in the middle of the process, using the last aggregated student as its starting point.

The systems described has many applications. On example is image classification. Other examples include self-supervised tasks such as denoising, super-resolution, etc. Or reinforcement learning tasks such as self-piloting, for example, of drones or vehicles.

The models 12, 14 can be transferred over a wireless and/or wireline communication network channel. It could be that one node compresses the weights of the neural networks and sends them to the central node or vice-versa. As alternative one may use ON NX file formats for sending and receiving the networks. Instead of sending uncompressed weights or simply compressing the weights or using ONNX and transferring them one can use the NNR standard. The NNR designs the practices for how to reduce the communication bandwidth for transferring neural networks for deployment and training in different scenarios, including federated learning setup.

FIG 7 illustrates an example of a method 200. The method comprises:

at block 202, at one or more (edge) nodes 10e, training a federated edge student network 20e using private, labelled data 4e;

at block 204, receiving the trained federated edge student network 20e (e.g. parameters of the network) at the central node 10c and updating a federated central student network 20c with the trained federated edge student network 20e;

at block 206, improving the updated federated central student network $20_c$ using a central teacher network $30_c$ and public unlabeled data $2_c$;

receiving the improved federated central student network $20_c$ (e.g. parameters of the network) at one or more edge nodes 10e and updating the edge student(s) networks $20_e$ (or a different student network(s) $10_e$) using the improved federated central student 20c.

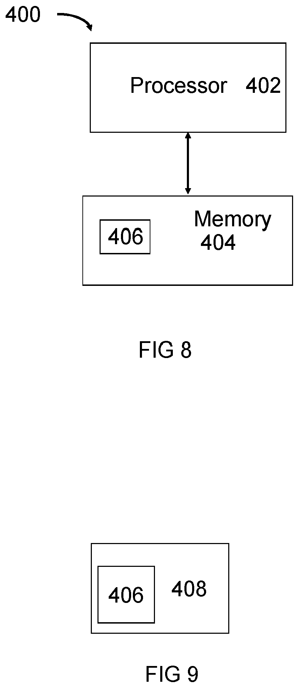

Fig 8 illustrates an example of a controller 400 of the node 10. Implementation of a controller 400 may be as one or more controller circuitries, e.g. as an engine control unit (ECU). The controller 400 may be implemented in hardware alone, have certain aspects in software including firmware alone or can be a combination of hardware and software (including firmware).

As illustrated in Fig 8 the controller 400 may be implemented using instructions that enable hardware and/or software functionality, for example, by using executable instructions of a computer program 406 in a general-purpose or special-purpose processor 402, wherein the computer programs 406 may be stored on a computer readable storage medium (disk, memory etc.) to be executed by such a processor 402. Further, the controller may be connected to one or more wireless and/or wireline transmitters and receivers, and further, to related one or more antennas, and configured to cause communication with one or more nodes 10.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10 when loaded into the processor 402. The computer program instructions, of the computer program 406, provide the logic and routines that enables the apparatus to perform the methods illustrated in Figs 2-7. The processor 402 by reading the memory 404 is able to load and execute the computer program 406.

Additionally, the node 10 can have one or more sensor devices which generate one or more sensor specific data, date files, data sets, and/or data streams. In some examples, the data can be local in the node, private for the node, and/or for user of the node. In some examples, the data can be public and available for one or more nodes. The sensor device can be, for example, a still camera, video camera, radar, lidar, microphone, motion sensor, accelerator, IMU (Inertial Motion Unit) sensor, physiological measurement sensor, heart rate sensor, blood pressure sensor, environment measurement sensor, temperature sensor, barometer, battery/power level sensor, processor capacity sensor, or any combination thereof.

The apparatus 10 therefore comprises:

at least one processor 402; and
at least one memory 404 including computer program code
the at least one memory 404 and the computer program code configured to, with the at least one processor 402, cause the apparatus 10 at least to perform:

enabling a federated smaller size first machine learning network configured to update a machine learning model in dependence upon updated machine learning models of the one or more node;
enabling a larger size second machine learning network;
enabling teaching, using supervised learning, at least the federated first machine learning network using the larger size second machine learning network, wherein the larger size second machine learning network is configured to receive data and produce pseudo labels for supervised learning using the data and wherein the federated smaller size first machine learning network is configured to perform supervised learning in dependence upon the data and the pseudo-labels.

As illustrated in Fig 9, the computer program 406 may arrive at the apparatus 10e,c via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

Computer program instructions for causing an apparatus to perform at least the following or for performing at least the following:

enabling a federated smaller size first machine learning network configured to update a machine learning model in dependence upon updated machine learning models of the one or more node;
enabling a larger size second machine learning network;
enabling teaching, using supervised learning, at least the federated first machine learning network using the larger size second machine learning network, wherein the larger size second machine learning network is configured to receive data and produce pseudo labels for supervised learning using the data and wherein the federated smaller size first machine learning network is configured to perform supervised learning in dependence upon the data and the pseudo-labels.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 2-7 may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The algorithms hereinbefore described may be applied to achieve the following technical effects:

control of technical systems outside the federated system such as autonomous vehicles;
image processing or classification;
generation of alerts based on labeling of input data;
generation of control signals based on labeling of input data;
generation of a federated student network that can be distributed as a series of parameters to a device. This allows a device that cannot enable the larger teacher network or does not have access to large amounts (or any) training data, to have a well-trained federated student network for use.

Other use cases include:

In a general use case, the system 100 comprises a central node 10c and one or more edge nodes 10e. The central node 10c can have a neural network model, e.g. a teacher network, for a specific task. The one or more edge nodes can have a related student network, that has smaller and partly similar structure than the teacher network. The edge node can download or receive the related student network from the central node or some other central entity that manages the teacher-student network pair. In one example, the edge node can request or select a specific student network that matches its computational resources/restriction. In a similar manner, the edge node can also download or receive the related teacher network, and additionally an adversarial network, which can be used to enhance the training of the teacher and student networks. The training of the student and teacher models can follow the one or more example processes as described in the FIGs 2-7. When the training of the student network is done, the central node sends the trained model to the one or more edge nodes. Alternatively, the edge device directly possesses the trained model at the end of the training process. The edge node records, receives and/or collects sensor data from one or more sensors in the edge node. No data is sent to the central node. Then the edge node can use the trained model for inferencing the sensor data in the node itself to produce one or more inference results, and further determine, such as select, one or more actions/instructions based on the one or more inference result. The one or more actions/instructions can be executed in the node itself or transmitted to some other device, e.g. a node 10.

Vehicle / autonomous vehicle as the edge device:

The system 100 can provide, for example, one or more driving pattern detection algorithms for different types of drivers, vehicle handling detection algorithms for different types of vehicles, engine function detection algorithms for different types of engines, or gaze estimation for different types of drivers. The vehicle collects sensor data e.g. from one or more speed sensors, motion sensors, brake sensors, camera sensors, etc. During inferencing using the related trained model the vehicle can detect related settings, conditions and/or activities, and can further adjust vehicle settings, e.g. in one or more related sensors, actuators and/or devices, including, for example:

- driving setting for a specific type of driver, or for specific person (who's data is collected),
- vehicle handling settings for a specific type of vehicle,
- engine settings, e.g. setting for a specific type of engine,
- vehicle's User Interface (UI) wherein a gaze estimation neural network is used to estimate the gaze of the driver and control an on-board User Interface or a head-up display (HUD) accordingly. Calibration of the gaze estimation neural network to a specific driver can be improved in terms of speed and precision by training on more data by using the proposed federated learning setup.

Mobile communication device or smart speaker device as the edge device:

The target of a trained student network model is e.g. one or more speech-to-text / text-to-speech algorithms for different language dialects and idioms. The device collects one or more samples of user's speech by using one or more microphones in the device. During inferencing using the trained model the device can better detect the spoken words, e.g. one or more instructions, and determine/define one or more related instructions/actions and respond accordingly.

Wearable device as the edge device:

The target of a trained student network model is e.g. movement pattern detection algorithms/models for different movements, different body types, and/or age groups, user's health risk estimation and/or detection, based on sensor data analysis. The device collects sensor data e.g. from one or more motion sensors, physiological sensors, microphones, radar sensors, etc. During inferencing using the trained model the device can better detect/record physical activity of the user of the device and/or can better detect risks and/or abnormalities in physical functions of the user of the device, and define/determine one or more related instructions/actions and respond accordingly, e.g. to give instructions and/or sending an alarm signal to a monitoring entity/service/apparatus.

Internet of Things (IoT) device as the edge device:

The target of a trained student network model is sensor data analysis/algorithms in different physical environments and/or industrial processes. The device collects sensor data e.g. from one or more camera sensors, physiological sensors, microphones, etc. During inferencing using the trained model the device can better detect activity and phases of the process and/or environment, and define/determine one or more related instructions/actions and further adjust one or more process parameters, sensors and/or devices accordingly.

Further, a client/edge device, e.g. a node 10e, as described in the one or more use cases above, when comprising:

> at least one processor; and
> at least one memory including computer program code;
> the at least one memory and the computer program code configured to, with the at least one processor, can cause the client device at least to perform, for example:

>> receive/detect/determine sensor data from one or more sensors in the client device;
>> use a federated teacher-student machine learning system trained student network/algorithm/model, as trained, for example, based on the one or more processes described in one or more of the FIGs 2 - 7, to inference the received sensor data to produce one or more related inference results; determine one or more instructions based on the one or more inference results; wherein the one or more instructions can be executed in the client device and/or transmitted to some other device, such any node 10.

Further, a central node for a federated machine learning system, e.g. a node 10c, as described in the one or more use cases above, can be configured to a teacher-student machine learning mode, based on the one or more processes described in one or more of the FIGs 2-7, when comprising;

> at least one processor; and
> at least one memory including computer program code;
> the at least one memory and the computer program code configured to, with the at least one processor, cause at least to perform:
> train, by supervised learning, a federated student machine learning network using a teacher machine learning network,
> wherein the teacher machine learning network is configured to produce pseudo labels for the supervised learning using received unlabeled data,
> wherein the federated student machine learning network is configured to perform supervised learning in dependence upon the received unlabeled data and the produced pseudo-labels,
> send the trained federated student machine learning network to one or more client nodes, such as node 10e,
> receive one or more updated client student machine learning models from one or more client nodes for the sent trained federated student machine learning network, and update the federated student machine learning network with the one or more updated client student machine learning models.

The above process can continue/repeated until the update the federated student machine learning network has desired accuracy.

As used here 'module' refers to a unit or apparatus that excludes certain parts/components that would be added by an end manufacturer or a user.

A network 20, 30, 40 can, in at least some examples, be a module. A node 10 can, in at least some examples, be a module.

The above described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning, then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. An apparatus for a federated machine learning system comprising means for performing:

   updating a machine learning model, with a federated student machine learning network, in dependence upon updated machine learning models of one or more other nodes;
   wherein the apparatus is configured for a same machine learning task than the one or more other nodes;
   teaching, with a teacher machine learning network, by using supervised learning, the federated student machine learning network
   wherein the teacher machine learning network is configured to produce pseudo-labels for the supervised learning by using received unlabeled data, and
wherein the federated student machine learning network is configured to perform supervised learning in dependence upon the received unlabeled data and the produced pseudo-labels.

2. An apparatus as claimed in claim 1, wherein the means are further configured to perform with an adversarial machine learning network:

receiving the unlabeled data,
receiving the produced pseudo-labels from the teacher machine learning network,
receiving label-estimates from the federated student machine learning network, and
providing an adversarial loss to the teacher machine learning network, for training the teacher machine learning network.

3. An apparatus as claimed in claim 1 or 2, wherein the means are further configured to perform with an adversarial machine learning network:

receiving the unlabeled data,
receiving the produced pseudo-labels from the teacher machine learning network,
receiving label-estimates from the federated student machine learning network, and
providing an adversarial loss to the federated student machine learning network for training the federated student machine learning network.

4. An apparatus as claimed in claim 1, wherein the means are further configured to perform with an adversarial machine learning network:

receiving the unlabeled data,
receiving the produced pseudo-labels from the teacher machine learning network,
receiving label-estimates from the federated student machine learning network, and
providing an adversarial loss to the teacher machine learning network and the federated student machine learning network for training substantially simultaneously and/or parallelly the federated student machine learning network and the teacher machine learning network.

5. An apparatus as claimed in any preceding claim,
wherein the supervised learning in dependence upon the received unlabeled data and the produced pseudo-labels further comprises supervised learning of the federated student machine learning network and, as an auxiliary task, unsupervised learning of the teacher machine learning network.

6. An apparatus as claimed in any preceding claim, wherein the means are further configured to perform:
clustering by unsupervised learning of the teacher machine learning network that intra-cluster mean distance is minimized and inter-cluster mean distance is maximized.

7. An apparatus as claimed in any preceding claim, wherein the means are further configured to perform:
clustering the received unlabeled data and the produced pseudo-labels so that intra-cluster mean distance is minimized and inter-cluster mean distance is maximized.

8. An apparatus as claimed in any preceding claim, wherein the federated student machine learning network is configured to update a student machine learning model of the federated student machine learning network in dependence upon updated one or more same first machine learning models of the one or more other nodes.

9. An apparatus as claimed in any preceding claim, wherein model parameters of the federated student machine learning network are used to update model parameters of one or more another student machine learning networks.

10. An apparatus as claimed in any preceding-claim, wherein the federated student machine learning network is a student network and the teacher machine learning network is a teacher network configured to teach the student network.

11. An apparatus as claimed in claim 1, wherein the apparatus is a central node for the federated machine learning system,

wherein the one or more other node(s) are edge node(s) for the federated machine learning system, and wherein the federated machine learning system has a centralized federated machine learning system.

**12.** The apparatus of any preceding claim wherein the means comprises at least one processor; and at least one memory including computer program code, the at least one memory and computer program code configured to, with the at least one processor, cause the performance of the apparatus.

**13.** A node for a federated machine learning system comprising means for:

updating, with a federated student machine learning network, a machine learning model with label estimates in dependence upon a received updated machine learning model;
with an adversarial machine learning network, receiving labels from labelled data and receive the label-estimates from the federated student machine learning network, and configuring to provide an adversarial loss to the federated student machine learning network for training the federated student machine learning network,
wherein model parameters of the federated student machine learning network are used to update model parameters of another student machine learning network using federated machine learning.

**14.** A client device, comprising:

at least one processor; and
at least one memory including computer program code;
the at least one memory and the computer program code configured to, with the at least one processor, cause the client device at least to perform:

receive sensor data from one or more sensors in the client device;
use a federated teacher-student machine learning system trained student network to inference the received sensor data to produce one or more related inference results;
determine one or more instructions based on the one or more inference results,
wherein the one or more instructions can be executed in the client device and/or
transmitted to some other device.

**15.** A central node for a federated machine learning system configured to a teacher-student machine learning mode, comprising;

at least one processor; and
at least one memory including computer program code;
the at least one memory and the computer program code configured to, with the at least one processor, cause at least to perform:

train, by supervised learning, a federated student machine learning network using a teacher machine learning network,
wherein the teacher machine learning network is configured to produce pseudo labels for the supervised learning using received unlabeled data,
wherein the federated student machine learning network is configured to perform supervised learning in dependence upon the received unlabeled data and the produced pseudo-labels,
send the trained federated student machine learning network to one or more client nodes,
receive one or more updated client student machine learning models from one or more client nodes for the sent trained federated student machine learning network, and
update the federated student machine learning network with the one or more updated client student machine learning models.

FIG 1

Private,
labeled

$4_e$

$20_e$

Edge student
(training)

EDGE NODE

$10_e$

FIG 2A

$10_e$

$20_e$

Edge student
(trained)

Model update

Federated
central student

$10_c$

$20_c$

12

EDGE NODE

$10_e$

CENTRAL NODE

$10_c$

FIG 2B

$30_c$

$2_c$

Public,
unlabeled

Teacher

$32_c$

pseudo-
label

$20_c$

Federated
central student

CENTRAL NODE

$10_c$

FIG 2C

$20_e$

Edge student

Model update

$20_c$

Federated central student

EDGE NODE

14

CENTRAL NODE

$10_c$

$10_e$

FIG 2D

$30_c$

Teacher

$2_c$

Public, unlabeled

Private, labeled

$4_e$

$20_e$

12

Model update

$20_c$

pseudo-label

Edge student

Federated central student

14

EDGE NODE

CENTRAL NODE

$10_e$

$10_c$

FIG 3

— 2$_e$

Teacher
(training)

30$_e$

Public,
unlabeled

Loss

32$_e$

40$_e$

REAL

Adversarial

42$_e$

FAKE

22$_e$

pseudo-
label

20$_e$

edge student
(public training)

label

EDGE NODE

10$_e$

FIG 4A

— 4$_e$

Private,
labeled

40$_e$

REAL label

Adversarial

Loss

42$_e$

20$_e$

edge student
(private training)

FAKE

22$_e$

label

EDGE NODE

10$_e$

FIG 4B

CENTRAL NODE
/
$10_c$                          FIG 5A

CENTRAL NODE
/
$10_c$                          FIG 5B

FIG 6

FIG 7

400

Processor   402

Memory
406   404

FIG 8

406   408

FIG 9

Europäisches
Patentamt

European
Patent Office

Office européen
des brevets

# EUROPEAN SEARCH REPORT

Application Number

EP 21 18 4441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NEEL GUHA ET AL: "One-Shot Federated Learning", ARXIV.ORG, CORNELL UNIVERSITY LIBRARY, 201 OLIN LIBRARY CORNELL UNIVERSITY ITHACA, NY 14853, 28 February 2019 (2019-02-28), XP081121746, * Sections 1,3,5 * | 1-15 | INV. G06N3/04 G06N3/08 G06N20/10 |
| A | Jeong Wonyong ET AL: "Federated Semi-Supervised Learning with Inter-Client Consistency & Disjoint Learning", , 22 June 2020 (2020-06-22), XP055867712, Retrieved from the Internet: URL:https://arxiv.org/pdf/2006.12097v1.pdf [retrieved on 2021-11-30] * Sections 1 and 2 * | 13 | |
| A | ALBASEER ABDULLATIF ET AL: "Exploiting Unlabeled Data in Smart Cities using Federated Edge Learning", 2020 INTERNATIONAL WIRELESS COMMUNICATIONS AND MOBILE COMPUTING (IWCMC), IEEE, 15 June 2020 (2020-06-15), pages 1666-1671, XP033799818, DOI: 10.1109/IWCMC48107.2020.9148475 [retrieved on 2020-07-24] * Sections III and IV * | 1-15 | **TECHNICAL FIELDS SEARCHED (IPC)** G06N |
| A | YILUN JIN ET AL: "A Survey towards Federated Semi-supervised Learning", ARXIV.ORG, CORNELL UNIVERSITY LIBRARY, 201 OLIN LIBRARY CORNELL UNIVERSITY ITHACA, NY 14853, 26 February 2020 (2020-02-26), XP081608563, * Sections 2-5 * | 1-15 | |

-/--

The present search report has been drawn up for all claims

| Place of search | Date of completion of the search | Examiner |
|---|---|---|
| The Hague | 9 December 2021 | Targon, Valerio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 21 18 4441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Lin Tao ET AL: "ENSEMBLE DISTILLATION FOR ROBUST MODEL FU- SION IN FEDERATED LEARNING", , 12 June 2020 (2020-06-12), XP055867715, Retrieved from the Internet: URL:https://arxiv.org/pdf/2006.07242v1.pdf [retrieved on 2021-11-30] * Section 3 * ----- | 1-15 | |

TECHNICAL FIELDS
SEARCHED (IPC)

The present search report has been drawn up for all claims

| Place of search | Date of completion of the search | Examiner |
|---|---|---|
| The Hague | 9 December 2021 | Targon, Valerio |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.....................................................................................

& : member of the same patent family, corresponding
   document

EPO FORM 1503 03.82 (P04C01)

page 2 of 2